# EUROPEAN PATENT SPECIFICATION

(11) **EP 0 401 951 B1**
(45) Date of publication and mention of the grant of the patent: **26.10.1994**
(21) Application number: 90300487.7
(22) Date of filing: 17.01.1990
(51) Int. Cl.: A47J 31/02, B65D 81/34

(54) **Filter device**
Filtervorrichtung
Dispositif de filtrage

(30) Priority: 07.06.1989 JP 67123/89
(43) Date of publication of application: 12.12.1990
(73) Proprietor: JAPAN I.P. CO. LTD., Amagasaki-shi, Hyogo (JP)
(72) Inventor: Iida, Motoyori, Itami-shi, Hyogo (JP)
(74) Representative: Abbie, Andrew Kenneth

(56) References cited:
- FR-A- 2 143 267
- FR-A- 2 388 722
- GB-A- 2 093 338
- US-A- 3 756 497
- US-A- 4 519 911

## Description

The present invention relates to filter devices, and particularly, but not exclusively, to disposable filter devices for coffee or black tea.

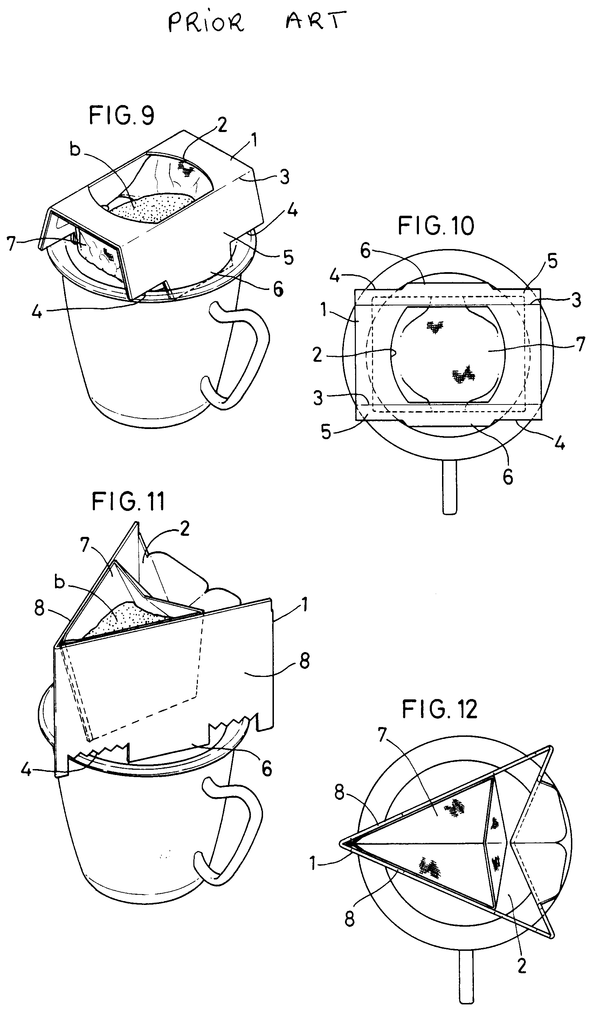

A variety of filter devices of this type are known. Some examples are shown in Figs. 9 to 12. The filter device shown in Figs. 9 and 10 comprises a filter body 1 having an opening 2 through which hot water may be poured and a bag member 7 made of filter paper which is bonded to the inner surface of the filter body 1 around its opening. The filter body 1 has side portions 5 adapted to be bent downwardly along parallel fold lines 3 disposed on either side of the opening 2. Protrusions 6 are provided along the opposite side edges of the filter body 1. The protrusions 6 are adapted to be brought into engagement with the inner edge of a cup as shown in Fig. 9.

The filter device shown in Figs. 11 and 12 has a filter body 1 comprising three side walls 8, one of which is folded inwardly to keep the filter in its collapsed state. A bag member 7 made of filter paper is bonded to the filter body 1 by partially bonding its top edge portion to the inner surface of the unfoldable two side walls along their top edge. In use, the folded side wall is pulled outwardly to form, in combination with the other two sides, a generally triangular shape as shown in Fig. 12. The filter device is placed on a cup in this state.

Powdered coffee is put in the bag member of the filter device placed on a cup and hot water is poured thereon. The hot water will pass through the filter paper together with the extract of coffee and drip into the cup. After use, the filter device is discarded together with the coffee grounds.

A disadvantage of he filter device shown in Figs. 9 and 10 is that if the coffee cup with which it is used has such a shape as to widen upwardly, the protrusions formed on both sides of the filter body cannot engage the inner wall of the cup because the side portions 5 are urged by their own resiliency in such a direction as to disengage the protrusions from the cup.

With the filter device shown in Figs. 11 and 12, when the foldable wall is pulled outwardly from its folded position, it shows a tendency to return to the folded position. Thus it is necessary to remove such a tendency in order for the filter body to keep its triangular shape shown in Fig. 12.

Another problem with these filter devices is that it is structurally difficult to sufficiently increase the volume of the bag member as well the size of its opening as will be apparent from Figs. 10 and 12.

Because of the small opening of the bag member, it is difficult to put powdered coffee thereinto without spillage. Thus most of the prior art filter devices of this type are sold with coffee powder prepacked in the bag member. Also because of the small volume of the bag member, hot water has to be poured onto the coffee little by little with great care. In order to increase the volume of the bag members of the prior art filter devices, it is necessary that they be folded in a complicated manner. Such bag members would be very difficult to make.

FR-A-2143267 discloses a filter device comprising a tubular filter body member collapsible along opposed vertical fold lines thereof and filter means comprising a bag member made of filter paper and having both sides thereof along its top edge bonded to the sides of said filter body member.

The invention aims to provide a device as defined in the last preceding paragraph which overcomes, at least in part, some of the disadvantages of the prior art outlined above. To this end, the invention provides such a device characterised in that the filter body member is provided with respective pairs of cuts or cutouts which extend across said fold lines to form respective tongue portions, said tongue portions being bendable inwardly of the body member to maintain the body member in an open condition.

The body member may further comprise aperture means adapted to enable a liquid level in said filter means to be seen.

The bag member may have a gussetted bottom.

The body member may be provided with means for mounting the body member on a vessel

The filter means may be releasably sealed in its collapsed condition.

The filter means may contain a leaf, powdered, or granular beverage.

In order that the invention may be well understood, two preferred embodiments will now be described, by way of example only, with reference to Figures 1 to 8B of the accompanying drawings, in which:
Fig. 1 is a front view of a filter device forming a first embodiment of the present invention;
Fig. 2 is a perspective view of the filter device of Fig. 1 shown mounted on a vessel;
Fig. 3 is a sectional front view of the same;
Fig. 4 is a sectional side view of the same;
Fig. 5 is a top view of the same;
Fig. 6 is a front view of a second filter device forming a second embodiment of the present invention;
Fig. 7 is a front view of the bag member of the second filter device;
Fig. 8A is a side view of the bag member in its closed condition;
Fig. 8B is a front view of the bag member in its open condition;
Fig. 9 is a perspective view of a prior art filter device in use;
Fig. 10 is a top view of the filter device of Fig. 9;
Fig. 11 is a perspective view of another prior art filter device in use; and
Fig. 12 is a top view of the filter device of Fig. 10.

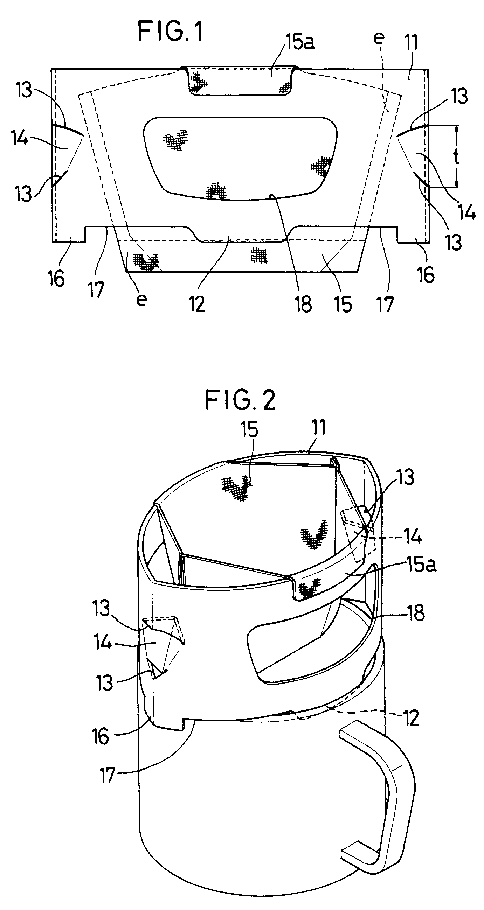

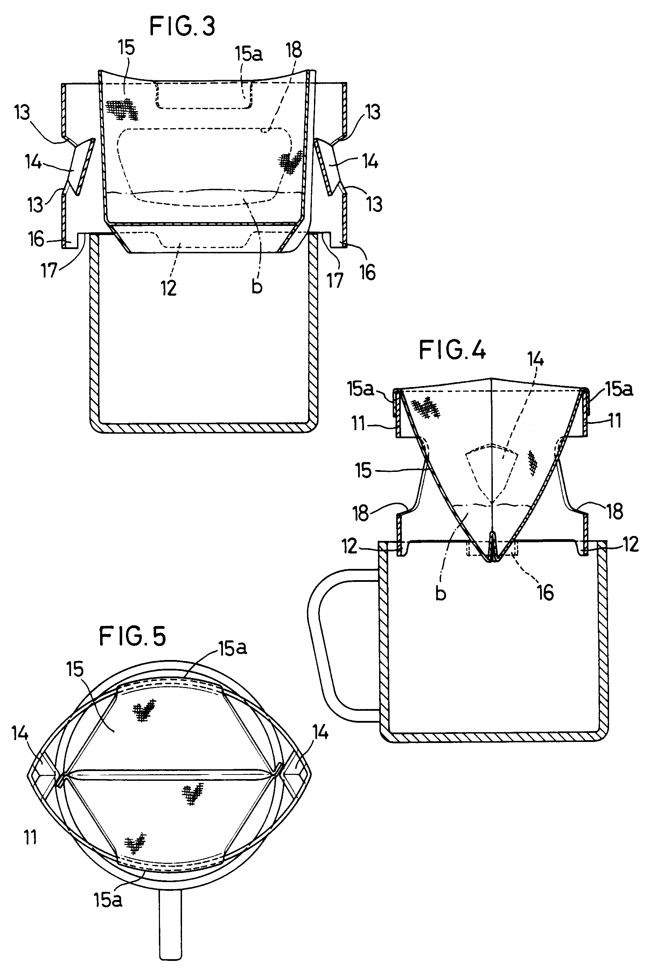

The first embodiment shown in Figs. 1 and 2, is a filter device comprising a filter body 11 which is formed by rolling a strip of water-proofed cardboard, bonding its ends together and collapsing the thus made annular web along opposite vertical fold lines such that the bonded part will be spaced apart from the fold lines. The body 11 is formed with aperture means in the form of a hole 18 disposed in the center of each side thereof and is provided along its bottom edge with protrusions 12 and 16. The protrusions 12, 16 are disposed at the center and either end of each side, respectively, as can be seen with reference to Figs. 3 and 4.

The filter body 11 is formed with respective pairs of cuts 13, extending inwardly from each fold line. As shown in Fig. 2, by inwardly bending tongue portions 14 defined between the respective pairs of cuts 13, the filter body 11 can be held in such a position that its top and bottom openings have an oval shape. The size of the top and bottom openings of the filter body is determined by the distance t between the pairs of cuts 13.

A filter means comprising a bag member 15 made of filter paper is received between the sides of the filter body 11 and has its opposed central portions 15a along top edge thereof bonded to the opposed central portions of the sides of the filter body 11. The portions 15a may be bonded to either the outer or inner surface of the sides of the filter body 11. Their respective top edges should preferably be at the same level as the top edge of the filter body 11.

In use, pressure is applied to both ends of the filter body 11 in its collapsed state to spread it open so that its top and bottom openings will have an oval shape. The tongue portions 14 are pushed in to hold the filter body in this state. As the filter body is spread open, the bag member 15, having its opposed central portions 15a bonded to the opposed upper central portions of the filter body 11, will spread open into an inverted truncated cone, as viewed in Fig. 4.

As shown in Figs. 2 to 4, the filter device thus opened is placed on a cup or vessel such that the bag member 15 is located substantially in the center of the opening of the cup and the protrusions 12 are inside the cup. A powdery material b such as roasted coffee or black tea is put in the bag member 15 and a desired amount of hot water is poured thereon. The extract of the powdery material b will pass through the bag member 15 together with the hot water and drip into the cup.

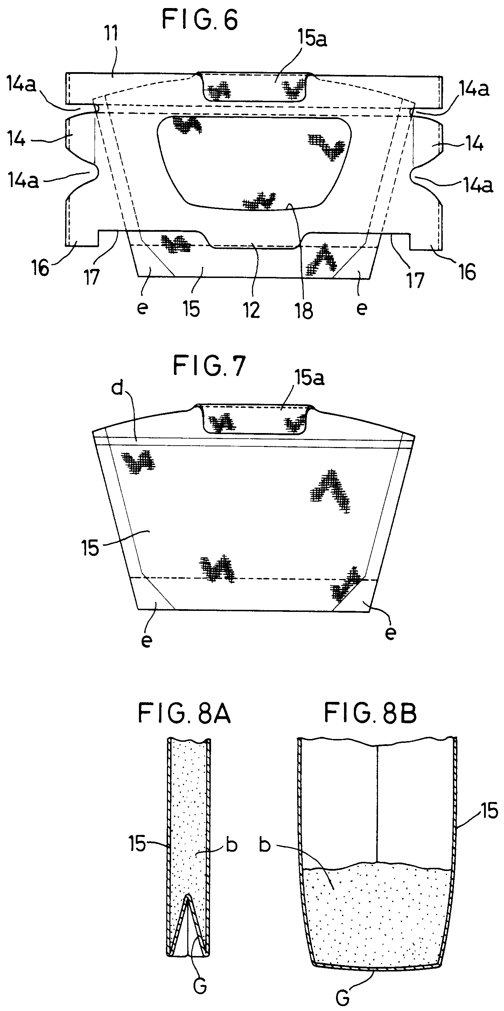

A second filter device will now be described with reference to Figs. 6 to 8. The second filter device is similar to the first filter device. Accordingly, like reference numerals will be used to designate like or similar parts.

In this embodiment, as shown in Fig. 6, the filter body 11 is formed across each fold line with upper and lower cutouts 14a which define respective tongue portions 14 therebetween. The bag member 15 is filled with a predetermined amount of powdery material b after which it has its opening heat-sealed weakly as indicated at d in Fig. 7. The seal may be easily broken by pulling the sides of the bag member apart. Further, the bag member 15 has a gussetted bottom, as shown at G in Fig. 8A. ouring of hot water into the bag member 15 through its opening will cause the gussetted bottom area to spread as shown in Fig. 8B. The letters e indicate strong seals.

The filter device of the second embodiment may be mounted on a cup with the filter body spread open in the same manner as the first filter device.

The filter device can be easily located concentrically with the opening of a cup by placing it so that the edge of the cup will be received in the recesses 17 formed between the protrusions 12 and 16 which structure constitutes a means for mounting the body member on a cup or vessel.

The provision of the holes 18 makes it possible to visually check the level of water in the bag member 15.

As the amount of water in the bag member 15 increases, its bottom area spreads as shown in Fig. 8B. This serves to increase the rate of extraction and to lower the center of gravity of the bag member. Thus the filter device is mounted more stably on the cup. It will be appreciated that the above-described embodiments provide a filter device which can be stably mounted on a cup irrespective of the shape of its opening; which can use a bag member of any shape; and which has a bag member having a larger volume. As is apparent from Figs. 5, 10 and 12, the bag member has a larger volume and a larger opening when spread open, than the bag members of the illustrated prior art filter devices. Thus a larger amount of hot water can be poured into the bag member without difficulty.

The filter body can be held in an open condition such that its top and bottom openings have an oval shape simply by pushing in the tongue portions.

## Claims

1. A filter device comprising a tubular filter body member (11) collapsible along opposed vertical fold lines thereof and filter means comprising a bag member (15) made of filter paper and having both sides thereof along its top edge bonded to the sides of said filter body member, characterised in that said filter body member is provided with respective pairs of cuts (13) or cutouts (14a) which extend across said fold lines to form respective tongue portions (14), said tongue portions being bendable inwardly of the body member to maintain the body member in an open condition.

2. A device according to claim 1, wherein said body member further comprises aperture means (18) adapted to enable a liquid level in said filter means to be seen.

3. A device according to claim 1 or 2, wherein said bag member (15) has a gussetted bottom.

4. A device according to claim 1, 2 or 3, wherein said body member is provided with means (12, 16, 17) for mounting the body member on a vessel.

5. A device according to any one of the preceding claims, wherein said filter means is releasably sealed in its collapsed condition.

6. A device according to claim 5, wherein said filter means contains a leaf, powdered or granular beverage.

## Patentansprüche

1. Filtervorrichtung, umfassend einen röhrenförmigen Filterkörper (11), der längs gegenüberliegenden vertikalen Falzlinien zusammenklappbar ist, und eine Filtereinrichtung mit einem Filterbeutel (15) aus Filterpapier, dessen beide Seiten längs seiner Oberkante mit den Seiten des genannten Filterkörpers verbunden sind, dadurch gekennzeichnet, daß der Filterkörper jeweils mit Paaren von Schnitten (13) oder Ausschnitten (14a) versehen ist, die längs den genannten Falzlinien verlaufen und jeweils Zungenabschnitte (14) bilden, die in das Innere des Filterkörpers faltbar sind, um den Filterkörper in geöffnetem Zustand zu halten.

2. Vorrichtung nach Anspruch 1, dadurch gekennzeichnet, daß der Filterkörper zusätzlich Öffnungseinrichtungen (18) enthält, die so angeordnet sind, daß der Flüssigkeitsstand in den Filter sichtbar ist.

3. Vorrichtung nach Anspruch 1 oder 2, dadurch gekennzeichnet, daß der Filterbeutel (15) einen zwickelartigen Boden aufweist.

4. Vorrichtung nach Anspruch 1, 2 oder 3, dadurch gekennzeichnet, daß der Filterkörper mit Einrichtungen (12, 16, 17) zum Aufsetzen auf ein Gefäß versehen ist.

5. Vorrichtung nach einem der vorhergehenden Ansprüche, dadurch gekennzeichnet, daß die Filtereinrichtung in zusammengeklapptem Zustand so verschlossen ist, daß sie wieder geöffnet werden kann.

6. Vorrichtung nach Anspruch 5, dadurch gekennzeichnet, daß die Filtereinrichtung ein Getränk in Blatt-, Pulver- oder Granulatform enthält.

## Revendications

1. Dispositif de filtrage comprenant un élément formant corps de filtre tubulaire (11), apte à être aplati le long de lignes de pliage verticales opposées de cet élément, et un moyen formant filtre qui comprend un élément en sachet (15) fait de papier filtre et dont deux côtés, formés le long de son bord supérieur, sont liés aux côtés dudit élément formant corps de filtre, caractérisé en ce que ledit élément formant corps de filtre est pourvu de paires respectives d'entailles (13) ou de découpes (14a), qui s'étendent à cheval sur lesdites lignes de pliage pour définir des parties respectives en forme de languettes (14), lesdites parties en forme de languettes pouvant être déployées vers l'intérieur de l'élément formant corps pour maintenir l'élément formant corps dans un état ouvert.

2. Dispositif selon la revendication 1, dans lequel ledit élément formant corps comprend en outre un moyen formant une ouverture (18) apte à permettre de voir un niveau de liquide dans ledit moyen formant filtre.

3. Dispositif selon la revendication 1 ou 2, dans lequel ledit élément en sachet (15) présente un fond en forme de gousset.

4. Dispositif selon la revendication 1, 2 ou 3, dans lequel ledit élément formant corps est pourvu de moyens (12, 16, 17) permettant de monter l'élément formant corps sur un récipient.

5. Dispositif selon l'une quelconque des revendications précédentes, dans lequel ledit moyen formant filtre est fermé de façon hermétique, avec possibilité de ré-ouverture, dans son état aplati.

6. Dispositif selon la revendication 5, dans lequel ledit moyen formant filtre contient un breuvage sous forme de feuilles, de poudre, ou de granulés.
